# EUROPEAN PATENT APPLICATION

(11) **EP 1 011 276 A1**
(43) Date of publication of application: **21.06.2000**
(21) Application number: 98124068.2
(22) Date of filing: 18.12.1998
(51) Int. Cl.: H04Q 7/22, H04Q 7/32, H04B 7/185

(54) **Communication system containing information about different time zones in which mobile stations are located**

(71) Applicant: TELEFONAKTIEBOLAGET LM ERICSSON (publ), 126 25 Stockholm (SE)
(72) Inventor: Kaibel, Martin, 52070 Aachen (DE); Sharifan, Hashem, 52146 Würselen (DE); Maekiniemi, Petri, 52146 Würselen (DE)
(74) Representative: Mohsler, Gabriele

(57) **Abstract**

The invention concerns a multiple access communication system
- with at least one access node,
- wherein said access node interfaces with a plurality of mobile user equipments (21, 22, 23).
According to the invention the access node contains information about different time zones and/or local times in locations in which the mobile user equipments (21, 22, 23) are located.

The invention further concerns a method for managing a multiple access communication system, wherein at least one access node interfaces with a plurality of mobile user equipments (21, 22, 23), which is carried out in a way that at least one parameter of communication depends on the time zone and/or local time in which the mobile user equipments (21, 22, 23) are located.

## Description

The present invention relates to a multiple access communication system with at least one access node, wherein said access node interfaces with a plurality of mobile user equipment.

The invention further concerns a method for managing a multiple access communication system, wherein at least one access node interfaces with a plurality of mobile user equipment.

Multiple access communication systems such as cellular and/or satellite based telephone systems developed significantly in operations world-wide. Innovative solutions are required to meet increasing service demands of a rapidly growing number of users.

As extensions of multiple access communication systems strongly increase the communication system has to be designed in a way which allows an efficient handling of access of the mobile user equipment to the communication system.

Current multiple access communication systems include an information of a system time in a centralised unit. The system time is identical for all users of the communication system. Future telecommunication systems will serve areas, that will include more than one time zone and hence will have to take local times in account.

It is an object of the present invention to create a multiple access communication system which operates efficiently according to a differentiation of mobile user equipment.

This will be solved advantageously by the system of claim 1, the method of claim 17, the means of claim 25 and the mobile user equipment of claim 27.

A further object of the invention is a method for managing a multiple access communication system, wherein at least one access node interfaces with a plurality of mobile user equipment, which is carried out in a way that at least one parameter of communication depends on the time zone and/or local time in which the mobile user equipment are located.

Another object of the invention is to supply processing means for a multiple access communication system.

A further object of the invention is a mobile user equipment, capable of communicating in a multiple access communication system.

Further advantageous embodiments and implementations are achieved according to the claims 2 to 16, 18 to 24, 26 and 28 to 30.

The invention makes use of the idea that information about time and/or a time zone of each separate user is available in at least one access node of the communication system.

According to the invention, the problem is solved by a multiple access communication system with at least one access node, wherein said access node interfaces with a plurality of mobile user equipment which is accomplished in a way, that the access node and/or the mobile user equipment contain information about different time zones and/or local times in locations in which the mobile user equipment are located.

The information of the time zones concerns the time zone in which the mobile user equipment is located. This time zone is not to necessarily the time zone in which the access node is located. The time zone information could be in example given as the difference between the local time or time zone and the centralised system time. For achieving a call optimisation, it is possible that an access node in a first time zone interfaces with a mobile user equipment in a second time zone. The access node, especially a ground station of a satellite based communication system, preferably contains information about the time zone in which every mobile user equipment that interfaces or could interface with the access node is located.

The mobile user equipment is, for example, a mobile terminal such as a hand-held computer, a notebook-computer, a mobile telephone apparatus or a mobile multimedia system.

The access node gives the mobile user equipment access to a terrestrial communication system or to a further mobile communication system.

In an advantageous implementation of the communication system, the method, the processing means, and the mobile user equipment, at least one parameter of communication depends on the time zone and/or local time in which the mobile user equipment are located.

In a further advantageous implementation of the communication system, the method, the processing means, and the mobile user equipment, the access node contains information about different time zones and/or local times in locations in which the mobile user equipment can be located.

In a preferred embodiment of the communication system, the method, the processing means, and the mobile user equipment, the communication system is capable of modifying at least one parameter of communication for at least one of the mobile user equipment depending on the time zone and/or local time in which the mobile user equipment is located.

In an advantageous implementation of the communication system, the method, the processing means, and the mobile user equipment, the access node is equipped with a means that contains locations of mobile user equipment and processes information on the time zone and/or local time in the locations in which the users can be located.

In a preferred embodiment of the communication system, the method, the processing means, and the mobile user equipment, the access node is equipped with means that checks locations of mobile user equipment and processes information on the time zone and/or local time in the location in which the users can be located.

In an advantageous implementation of the communication system, the method, the processing means, and the mobile user equipment, the parameter of communication is handled differently for mobile user equipment located in locations with different time zones and/or different local times.

In a preferred embodiment of the communication system, the method, the processing means, and the mobile user equipment, it is checked, whether a mobile user equipment has crossed a time zone boundary.

In a further advantageous implementation of the communication system, the method, the processing means, and the mobile user equipment, it is checked during a handover, whether a mobile user equipment has crossed a time zone boundary.

In a preferred embodiment of the communication system, the method, the processing means, and the mobile user equipment, at least one parameter of communication or a parameter of a handling of the communication is modified after the mobile user equipment has crossed a time zone boundary.

In an advantageous implementation of the communication system, the method, the processing means, and the mobile user equipment, the access node receives positions of the mobile user equipment.

In a preferred embodiment of the communication system, the method, the processing means, and the mobile user equipment, the communication system is a cellular system and the locations are constituted by cells.

The cells may be virtual cells derived from assigning location information to cellular information.

For a clear distinction whether a certain user is located in a well-defined time zone, it is advantageous that the cells have an extension which is limited so that the cells do not cross time zone boundaries.

In a first implementation of the invention, the access node could be an antenna equipped with additional functions to handle information about time and/or time zone of the mobile user equipment.

However, it is more advantageous for the communication system, the method, the processing means, and the mobile user equipment, that the access node functions as logical node. A logical node in this context means a node that performs a logical analysis and treatment of data flow processes. The logical node performs an administration of static data. Static data are stored within the node. For example, static data are the time zone information for each cell. Dynamic data are transferred through the node. The analysis and the treatment performed by the logical node is related to the static data as well as to dynamic data such as information about the cell in which the mobile user equipment is located.

In an especially advantageous implementation of the invention, the logical analysis is based on the time zone in which the mobile user equipment are located.

In a preferred embodiment of the communication system, the method, the processing means, and the mobile user equipment, the access node is capable of creating charging information depending on local times of users and/or time zones in which they are located.

In an advantageous embodiment of the communication system, the method, the processing means, and the mobile user equipment, other logical functions of the communication system, the method, the processing means, and the mobile user equipment depend on the time zone in which a certain user is located. For example, the access node is capable of creating call forwarding information depending on local times of users and/or time zones in which they are located.

The described implementations and embodiments do not limit the scope of suitable access nodes. However, it is preferred that the access node is capable of giving the mobile user equipment access to a second part of the communication system or to a further communication system.

In a preferred embodiment of the communication system, the method, the processing means, and the mobile user equipment, the processing means is capable of determining a time zone and/or local time in which a mobile user equipment is located.

More specifically the processing means is capable of differentiating between different time zones and/or local times in which a mobile user equipment is located.

In a preferred embodiment of the communication system, the method, the processing means, and the mobile user equipment, the processing means is capable of modifying at least one parameter of communication depending on the time zone and/or local time in which a mobile user equipment is located.

In an advantageous implementation of the communication system, the method, the processing means, and the mobile user equipment, the mobile user equipment contains information about a time zone and/or a local time in a location in which the mobile user equipment is located.

In a preferred embodiment of the communication system, the method, the processing means, and the mobile user equipment, the mobile user equipment is capable of modifying at least one parameter of communication depending on the time zone and/or local time in which the mobile user equipment is located.

In an advantageous implementation of the communication system, the method, the processing means, and the mobile user equipment, the mobile user equipment contains a device for determining its position. A preferred example of this device is a receiver for signals of a Global Positioning System (GPS). Another preferred example of this device is a means using the location derivation supported by GSM. The antennas of the mobile user equipment receive these signals and an implemented evaluation means determines their positions by the analysis of these signals. The mobile user equipment are capable of sending their position to the access node of the communication system.

In the following the invention will be further described by means of examples and by means of the figures. The following figures show:
- Fig. 1: shows a schematic of an implementation of a regional satellite based communication system,
- Fig. 2: shows a schematic of a call optimisation in a regional satellite based communication system and
- Fig. 3: shows a functional schematic of an internal structure of a ground station of a satellite based communication system as described according to Fig. 1 or Fig. 2.

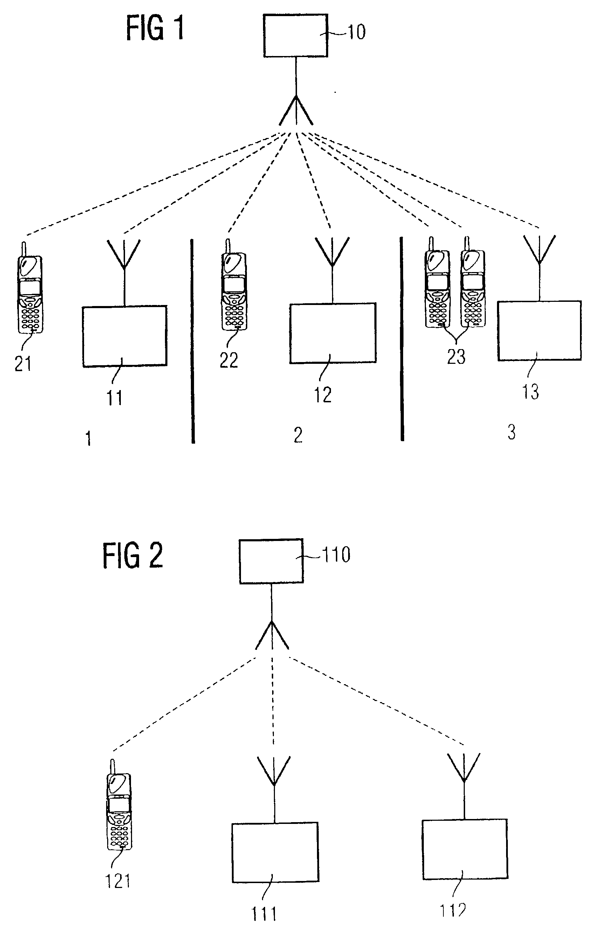

According to figures 1, 2 and 3 the present invention is described in conjunction with a satellite based communication system. However, the invention also includes other communication systems like an Universal Mobile Telecommunication System (UMTS) or the Global System for Mobile Communication (GSM) as well. In these implementations, the access node is constituted by an access node of a cellular mobile communication system, especially a base station or a radio network controller.

The satellite based communication system described according to figures 1, 2 and 3, contains several ground stations GS which are access nodes. Each access node is capable of giving the mobile user equipment access to a second part of the communication system or to a further communication system.

The satellite based implementation of the invention as well as conventional mobile communication systems are accomplished with a second part of the communication system or a separate communication system. It is advantageous, that the second part of the communication system or the separate communication system is constituted by a wired communication system, a wireless communication system or a cellular communication system.

The satellite based communication system shown in Fig. 1 covers time zones 1, 2 and 3. The time zones 1, 2 and 3 are located within a coverage area of a satellite 10, which is in an orbital position that is high enough to cover more than one time zone. A broad coverage in conjunction with a low number of necessary satellites is preferably obtained by positioning the satellite 10 in a geostationary position. However, the explained concepts apply to satellites in lower orbits as well as to extended mobile networks.

The number of ground stations relates to the number of users. In a first implementation of the communication system only one ground station is necessary for serving the whole communication system. The number of ground stations increases as the demand for using the system grows. The number of ground stations located within one time zone may vary from zero to an arbitrary value. Also, the number of time zones may vary from 2 to 24. The schematic representation according to figure 1 of one ground station 11, 12 or 13 located in each of the time zones 1, 2 and 3 has been chosen to give a better understanding. It does not limit the scope of the invention.

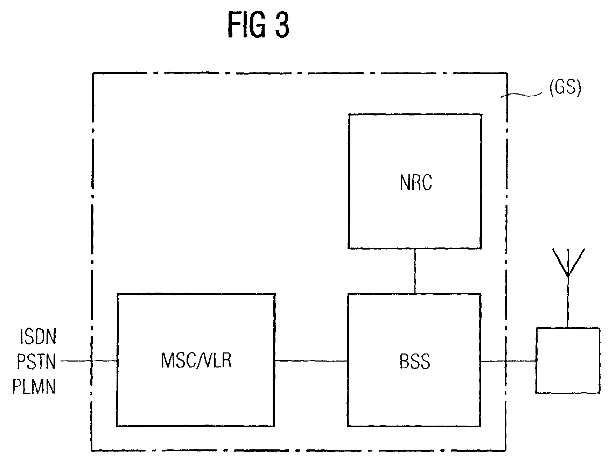

In this implementation every ground station handles calls from mobile terminals 21, 22 or 23, being in its area. In Figure 3, the service area of the ground station equals the service area of a mobile services switching centre. This was done to give an example and does not limit the scope of the invention.

The second implementation of a regional satellite based network as illustrated in figure 2 uses a call optimisation. Which ground station 112 optimally handles the call is decided before establishing or during early phases of an originating call from a mobile user equipment 121. This call optimisation is carried out with a minimal use of terrestrial resources.

Each of the ground stations 111, 112 contains a network resource controller NRC which checks on the location of called subscriber and initiates location update with a location area code that contains information about the identity of an optimal mobile services switching centre MSC in an optimal ground station. The network resource controller NRC manages satellite resources that are allocated to the ground station by an operator. These satellite resources are especially traffic channels and spot beams.

The mobile user equipment 121 subsequently re-registers in the optimal ground station and the call set up continues with reception of a service request.

An internal structure of a ground station used in the satellite based communication systems is described according to the figures 1 and 2 is represented in greater detail in figure 3.

The ground station provides connectivity between the satellite and a second wired communication system, a wireless communication system or a cellular communication system.

The ground station GS contains a base station subsystem. The base station subsystem BSS implements a radio interface towards the mobile user equipment. It corresponds to the base station subsystem in a cellular mobile communication system as the GSM.

The base station subsystem interacts with means for obtaining dynamically spectral resources per call. Several means may be connected to a mobile services switching centre and/or a visitor location register VLR.

The mobile services switching centre / visitor location register is preferably also integrated within the ground station and allows its access to a second part of the communication network, for example, a fixed network such as an Integrated Service Digital Network ISDN, a Public Switched Telephone Network PSTN or a mobile network such as a Public Land Mobile Network PLMN.

The described examples refer to a satellite based communication system with a low number of satellites. An implementation with a higher number of satellites is possible too. In this case the network resource controller NRC manages the satellite resources of more than one satellite.

However, the outlined implementation of the communication system, the method, and the processing means can also be adapted to other communication systems such as a cellular mobile network as well.

## Claims

1. A multiple access communication system
- with at least one access node,
- wherein said access node interfaces with a plurality of mobile user equipment (21, 22, 23, 121),
characterised in that the access node and/or the mobile user equipment contain information about different time zones and/or local times in locations in which the mobile user equipment (21, 22, 23, 121) are located.

2. The communication system according to claim 1, characterised in that the communication system is capable of modifying at least one parameter of communication for at least one of the mobile user equipment (21, 22, 23, 121) depending on the time zone and/or local time in which the mobile user equipment (21, 22, 23, 121) is located.

3. The communication system according to claim 1 or 2, characterised in that the access node is equipped with a means that contains locations of mobile user equipment (21, 22, 23, 121) and processes information on the time zone and/or local time in the locations in which the users can be located.

4. The communication system according to any of the claims 1 to 3, characterised in that the access node is equipped with a means that checks locations of mobile user equipment (21, 22, 23, 121) and processes information on the time zone and/or local time in the locations in which the users can be located.

5. The communication system according to any of the claims 2 to 4, characterised in that the parameter of communication is handled differently for mobile user equipment (21, 22, 23, 121) located in locations with different time zones and/or different local times.

6. The communication system according to any of the claims 1 to 5, characterised in that it is capable of a checking, whether a mobile user equipment (21, 22, 23, 121) has crossed a time zone boundary.

7. The communication system according to claim 6, characterised in that it is capable of checking during a handover, whether a mobile user equipment (21, 22, 23, 121) has crossed a time zone boundary.

8. The communication system according to any of the claims 2 to 7, characterised in that after the mobile user equipment (21, 22, 23, 121) has crossed a time zone boundary, at least one parameter of communication or a parameter of a handling of the communication is modified.

9. The communication system according to any of the claims 1 to 8, characterised in that the communication system is equipped with a Network Resource Controller and the Network Resource Controller contains and/or checks locations of mobile user equipment (21, 22, 23, 121) and adds information on the time zone and/or local time in which they are located.

10. The communication system according to any of the claims 1 to 9, characterised in that the access node receives positions of the mobile user equipment (21, 22, 23, 121).

11. The communication system according to any of the claims 1 to 10, characterised in that the communication system is a cellular system and that the locations are constituted by cells.

12. The communication system according to claim 11, characterised in that the cells have an extension which is as much limited as the cells do not cross time zone boundaries.

13. The communication system according to any of the claims 1 to 12, characterised in that the access node functions as logical node.

14. The communication system according to any of the claims 1 to 13, characterised in that the access node is capable of creating charging information depending on local times of mobile user equipment (21, 22, 23, 121) and/or time zones in which they are located.

15. The communication system according to any of the claims 1 to 14, characterised in that the access node is capable of creating call forwarding information depending on local times of users (21, 22, 23, 121) and/or time zones in which they are located.

16. The communication system according to any of the claims 1 to 15, characterised in that the access node is a ground station (GS, 11, 12, 13; 111, 112) of a satellite based communication system.

17. A method for managing a multiple access communication system, with at least one access node interfacing with a plurality of mobile user equipment (21, 22, 23, 121), characterised in that at least one parameter of communication determined depending on the time zone and/or local time in which the mobile user equipment (21, 22, 23, 121) are located.

18. The method according to claim 17, characterised in that at least one parameter of communication is modified depending on the time zone and/or local time in which a mobile user equipment (21, 22, 23, 121) is located.

19. The method according to claim 17 or 18, characterised in that the parameter of communication is handled differently for mobile user equipment (21, 22, 23, 121), which are located in locations with different time zones and/or different local times.

20. The method according to claim 17,18 or 19, characterised in that the access node stores information about different time zones and/or local times in locations in which the mobile user equipment (21, 22, 23, 121) are located.

21. The method according to any of the claims 17 to 20, characterised in that the parameter influences a forwarding of calls or a charging of a call.

22. The method according to any of the claims 17 to 21, characterised in that it is checked, whether a mobile user equipment (21, 22, 23, 121) has crossed a time zone boundary.

23. The method according to claim 22, characterised in that it is checked during a handover, whether a mobile user equipment (21, 22, 23, 121) has crossed a time zone boundary.

24. The method according to any of the claims 17 to 23, characterised in that after the mobile user equipment (21, 22, 23, 121) has crossed a time zone boundary at least one parameter of communication or a parameter of a handling of the communication is modified.

25. Processing means for a multiple access communication system,
characterised in that the processing means is capable of determining a time zone and/or local time in which a mobile user equipment (21, 22, 23, 121) is located.

26. Processing means for a multiple access communication system,
characterised in that the processing means is capable of modifying at least one parameter of communication depending on the time zone and/or local time in which a mobile user equipment (21, 22, 23, 121) is located.

27. A mobile user equipment (21, 22, 23, 121), capable of communicating in a multiple access communication system,
characterised in that the mobile user equipment contains information about a time zone and/or a local time in a location in which the mobile user equipment (21, 22, 23, 121) is located.

28. The mobile user equipment (21, 22, 23, 121) according to claim 27,
characterised in that the mobile user equipment (21, 22, 23, 121) is capable of modifying at least one parameter of communication depending on the time zone and/or local time in which the mobile user equipment (21, 22, 23, 121) is located.

29. The mobile user equipment (21, 22, 23, 121) according to claim 27 or 28,
characterised in that the mobile user equipment (21, 22, 23, 121) contains means for determining its position.

30. The mobile user equipment (21, 22, 23, 121) according to claim 29,
characterised in that the means for determining the position of the mobile user equipment (21, 22, 23, 121) is a receiver for signals of a Global Positioning System (GPS).
